Europäisches Patentamt

European Patent Office

Office européen des brevets

(11) Publication number: **0 126 045**
**B1**

(12) **EUROPEAN PATENT SPECIFICATION**

(45) Date of publication of patent specification: **02.03.88**    (51) Int. Cl.⁴: **A 47 B 57/40**

(21) Application number: **84850114.4**

(22) Date of filing: **10.04.84**

(54) **Device for locking a beam to an upright, for example in a pallet rack.**

| | |
|---|---|
| (30) Priority: **15.04.83 SE 8320115** | (73) Proprietor: **ELECTROLUX CONSTRUCTOR AKTIEBOLAG** <br> **P.O.Box 122 Säterivägen 1-3** <br> **S-661 00 Säffle (SE)** |
| (43) Date of publication of application: <br> **21.11.84 Bulletin 84/47** | |
| (45) Publication of the grant of the patent: <br> **02.03.88 Bulletin 88/09** | (72) Inventor: **Viklund, Ake Emanuel** <br> **Atlasgatan 2** <br> **S-661 00 Säffle (SE)** |
| (84) Designated Contracting States: <br> **AT BE CH DE FR GB IT LI NL** | (74) Representative: **Hagelbäck, Evert Isidor et al** <br> **c/o AB Electrolux Patentavdelningen** <br> **S-105 45 Stockholm (SE)** |
| (56) References cited: <br> **FR-A-2 209 418** <br> **FR-A-2 398 909** <br> **US-A-3 273 720** <br> **US-A-3 414 224** | |

Courier Press, Leamington Spa, England.

## Description

This invention relates to a device for locking a beam to an upright, for instance, in a rack for storing pallettes, the upright being provided with a series of holes, and the beam being provided at both ends with at least one downwardly directed hook adapted to be inserted into a respective one of said holes a part of the hook being accommodated behind the lower edge of the respective hole when the beam is in a rest position on the upright, the beam additionally being provided with locking means for locking the hook in the respective hole when the beam is in its rest position, said device for locking comprising a spring and a rigid lock device, the lock device comprising a bolt, a grip and a first control surface, the spring and the lock device being so arranged that the spring urges the bolt into a locking position between the upper edge of the respective hole and the upper part of the hook thus locking the hook in the respective hole when the beam is in its rest position, the grip being arranged to be operated manually so that the bolt can be extracted from its locking position, the first control surface being arranged so that it abuts on the upright when the hook is inserted into the respective hole and the beam is out of its rest position thus preventing the bolt from being urged into its locking position by the spring.

Devices of the above type are known. In these devices it is possible to unhook one end of the beam from the holes in the upright when the lock device is pulled out by one hand, and then to repeat the procedure at the other end of the beam. Then the beam is inserted into other holes and the lock device springs automatically into the free space in the hole above the hook when the beam is pressed downwards in the hole. These devices, however, have the drawback that it can be difficult to remove a mounted beam, particularly if it is a long beam and only one person is to perform the operation. This is due to the fact that for removing the beams the lock devices have to be acted upon simultaneously at both ends of the beam. Therefore, as a rule the operation is performed by two persons each one releasing and unhooking one end of the beam. This type of equipment is for instance described in French patent 2.209.418.

In order to make it possible for one single operator to release a beam it has been suggested to use an arrangement described in US patent 3.414.224. The beam according to this patent is provided with a leaf spring which is deformed in order to create a wing portion locking the beam in its rest position. By pulling the spring and turning it the spring can be set in an open position in which it is possible to take away the beam from the upright. When doing so the spring is returned to its original position and in readiness for automatic engagement.

Although this equipment mostly works satisfactory there is a risk that the spring because of its weak design is deformed and even destroyed when an upwardly directed strong force is applied on the beam. Such forces sometimes are established by lift fokes when handling material in the racks.

The object of the present invention is to create a reliable locking structure which can easily be handled by one single operator and this object is achieved with a device as defined in the following claim 1.

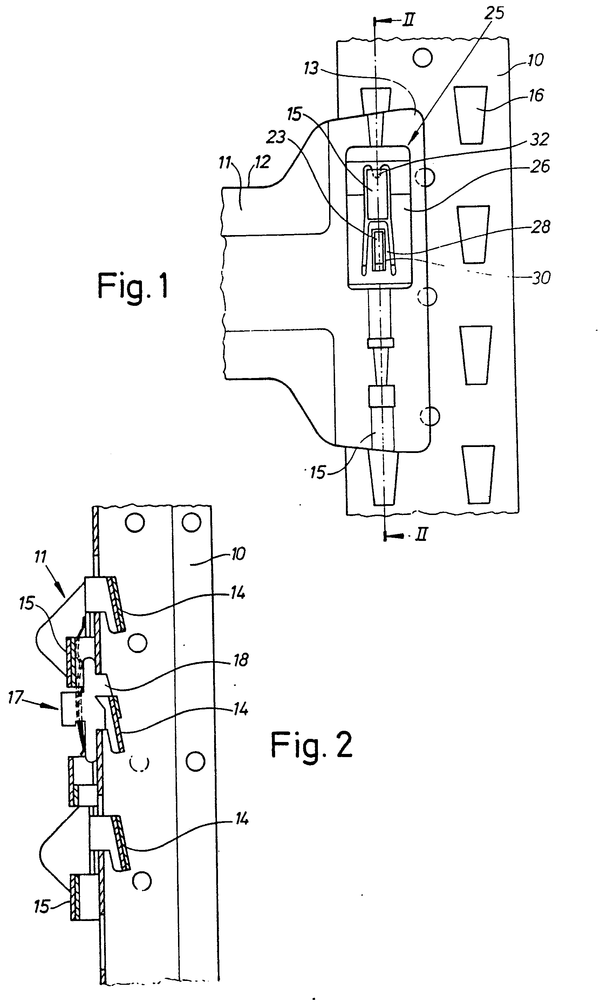

An embodiment of the invention will now be described with reference to the accompanying drawings in which the Figures show the function of the components of the lock device. Fig. 1 is a vertical projection of an upright with beam, Fig. 2 is a vertical section on the line II—II of Fig. 1, and Figs. 3—5 are enlarged vertical sections through beam and upright in the area of the lock device.

Fig. 1 shows an upright 10 supporting a beam 11 of profiled metal sheet. The beam is I-shaped in cross-section and has a load surface 12. The ends of the beam have a flat part 13 from which portions project alternately to one and the other side of the beam, respectively. These portions are U-shaped in cross section and are made by deformation of the flat part. The portions projecting to one side of the beam are formed as hooks 14 whereas the portions projecting to the other side of the beam form grooves 15 which extend vertically.

The upright 10 has two rows of holes 16, each hole with side walls converging downwardly.

In each end the beam has locking means including a lock device 17. This device has a bolt 18 whose outer part is shaped as a nose and is meant to fall into a hole 16 between the upper edge of the hole and the upper part of a hook 14. The lock device also has a first, generally vertical first control surface 19 co-acting with an area 20 below the lower edge of hole 16. The lock device has a lower projection 21 which via a second, control surface 22 merges into the first control surface 19. Further, the lock device has a grip 23 and an upper projection 24. The lock device is fastened to the beam in such a manner that the upper and the lower projection, respectively, lie in two adjacent grooves 15 at the end of the beam.

The lock device 17 is pressed by a spring 25 in the direction to a hook 14. The spring is a double leaf spring, one leaf 26 being shaped as a frame and having a point of action situated at 27 at the lower projection, while the other leaf 28 is shaped as a lug and has a point of action 29 situated at the level of the cylinder 18.

The leaf spring 28 has a vertical slot 30 through which the grip 23 of the lock device projects.

The upper end of spring 25 abuts the beam at 31 and its central part is in the shape of a stub 32 abutting the interior surface of the groove 15.

The device works in the following way.

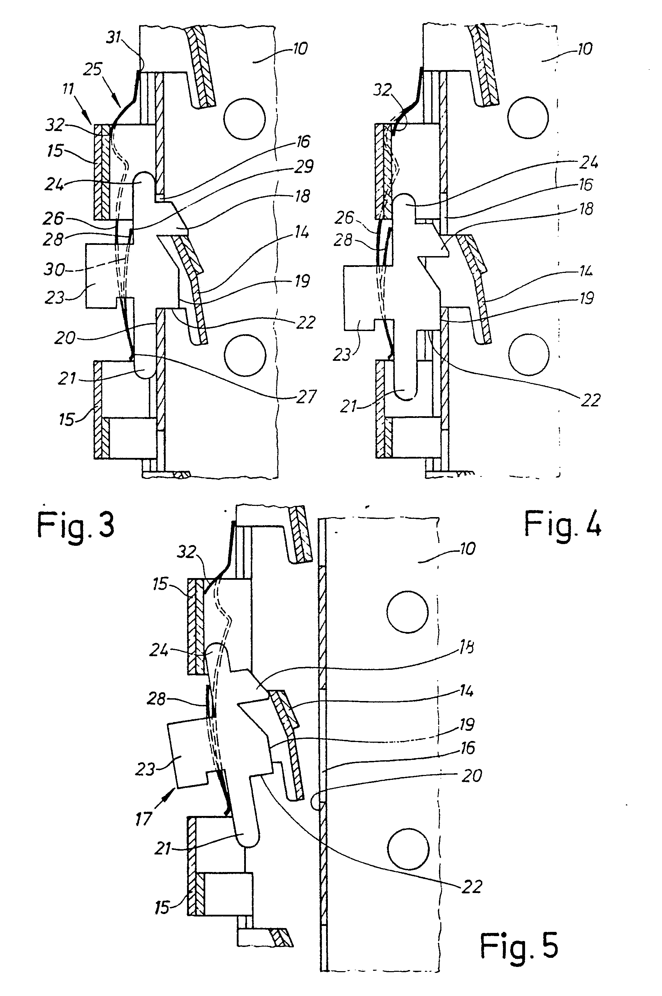

Fig. 3 shows the beam in mounted position on the upright. This means that the bolt 18 is inserted between the upper part of the hook 14 and the edge of the hole and locks the beam against movement in the vertical direction. To release the beam the grip 23 is used to pull the lock device 17 to the left in the Figure against the action of the spring 25. Then the grip, and hence the lock device, is moved vertically downward. The first control surface 19 passes over the edge of the hole and is brought to abut the area 20 of the upright 10. This is done at both ends of the beam. Then the beam is lifted so that the engagement of the first control surface 19 with the upright 10 ceases and this surface under the action of the spring 25 snaps into the position shown in Fig. 5. In this position the outer end of the bolt 18 abuts the inside of the hook 14 and the lower projection 21 projects out of the flat part 13 of the beam.

Then the beam can be stored for later use or be placed at another desired place. By the hooks of the beam being pushed into an upright the lower projection 21 of the lock device will turn to the left in Fig. 5, the lower edge of the hole thus coming into contact with the second control surface 22. Depression of the beam results in the lock device 17 being acted upon in the direction upwards so that the cylinder will again assume a position above the hook 14 and by the aid of the spring 25 will snap into the beam and lock it.

On some occasions the lock device will be acted upon by exterior forces when the beam has been released and the cylinder will be moved to a position above the hook. However, this does not alter the function of the device because it only means that the cylinder on mounting of the beam is automatically brought back when the hook of the beam is moved into the hole of the upright. When thereafter the beam is depressed the cylinder will be moved to the position shown in Fig. 3.

## Claims

1. Device for locking a beam to an upright, for instance in a rack for storing pallettes, the upright (10) being provided with a series of holes (16), and the beam (11) being provided at both its ends with at least one downwardly directed hook (14) adapted to be inserted into a respective one of said holes (16) a part of the hook being accommodated behind the lower edge of the respective hole (16) when the beam (11) is in a rest position on the upright (10), the beam (11) additionally being provided with locking means for locking the hook (14) in the respective hole (16) when the beam is in its rest position, said device for locking the beam (11) to the upright (10), comprising a spring (25) and a rigid lock device (17), the lock device (17) comprising a bolt (18), a grip (23) and a first control surface (19), the spring (25) and the lock device (17) being so arranged that the spring (25) urges the bolt (18) into a locking position between the upper edge of the respective hole (16) and the upper part of the hook (14) thus locking the hook (14) in the respective hole (16) when the beam is in its rest position, the grip being arranged to be operated manually so that the bolt (18) can be extracted from its locking position for removing the beam, the first control surface (19) being arranged so that it can be moved to abut on the upright (10) when the hook (14) is inserted into the respective hole (16) thereby preventing the bolt (18) from being urged into its locking position by the spring (25) characterized in that the lock device (17) is arranged as a runner adjacent the hook (14) and sliding between an upper and a lower position when the bolt (18) is extracted from its rest position, in that the lock device (17) in its upper position is ready to urge the bolt (18) into its rest position by the spring (25), in that the first control surface (19) is facing towards the hook and is placed on a projection (21) underneath the bolt (18) which has a second control surface (22) arranged adjacent and in angular relation to the first control surface (19), in that the lock device (17) in its lower position has its first control surface (19) ready to abut on the upright (10) underneath the respective hole (16) when the hook (14) is still within the hole (16), and in that the second control surface (22) is ready to abut on the lower edge of the respective hole (16) when the hook (14) is inserted into said hole (16), in order to move the lock device (17) from its lower to its upper position when the beam (11) is lowered into its rest position.

2. A device according to Claim 1, characterized in that in the bolt (18) rests on a part of the beam in a prestressed position when the beam has been released from the upright.

3. A device according to any preceding claim, characterized in that the outer part of the bolt (18) is shaped as a nose.

4. A device according to any preceding claim, characterized in that its lower projection (21), when the first stop surface (19) on removal of the beam disengages from the upright, turns outwards in such a way that it protrudes from that surface of the beam which rests on the outside of the upright.

5. A device according to Claim 4, characterized in that the spring (25) is a double leaf spring, in which the point of action of one spring (26) is situated at the lower projection (21) whereas the point of action of the other spring (28) is situated adjacent the upper part of the lock device (17).

6. A device according to Claim 5, characterized in that the beam (11) has projecting deformations (15) which are U-shaped in cross-section and into which the spring (25) is fastened.

7. A device according to any one of Claims 4—6, characterized in that the lock device (17) has an upper projection (24) which together with the lower projection (21) on extraction of the lock device by co-action with the U-shaped deformations (15) limits the path of movement of the lock device.

## Patentansprüche

1. Vorrichtung zum Verrasten eines Trägers in einem Steher, beispielsweise in einem Regal zum Lagern von Paletten, wobei der Steher (10) mit einer Reihe von Ausnehmungen (16) und der Träger (11) an seinen beiden Enden mit wenigstens einem nach unten gerichteten, für die Einführung in eine der Ausnehmungen (16) geeigneten Haken (14) versehen ist, ein Teil des Hakens hinter der unteren Kante der entsprechenden Ausnehmung (16) angeordnet ist, wenn sich der Träger (11) in einer Verrastungsstellung am Steher (10) befindet, und der Träger (11) zusätzlich mit Verriegelungseinrichtungen zum Verrasten des Hakens (14) in der entsprechenden Ausnehmung (16), wenn sich der Träger in seiner Verrastungsstellung befindet, versehen ist, welche Einrichtungen zum Verrasten des Trägers (11) mit dem Steher (10) eine Feder (25) und eine starre Verriegelung (17) haben, die einen Bolzen (18), einen Griff (23) und eine erste Anlagefläche (19) umfaßt, wobei die Feder (25) und die Verriegelung (17) derart angeordnet sind, daß die Feder (25) den Bolzen (18) in eine Verriegelungsstellung zwischen der oberen Kante der entsprechenden Ausnehmung (16) und dem oberen Abschnitt des Hakens (14) drückt, so daß der Haken (14) in die entsprechende Ausnehmung (16) einrastet, wenn der Träger in Verrastungsstellung ist, und der Griff händisch zu bedienen ist, so daß der Bolzen (18) zum Entfernen des Trägers aus seiner Verrastungsstellung gelöst werden kann, und die erste Anlagefläche (19) so angeordnet ist, daß sie bewegt werden kann, daß sie am Steher (10) anstößt, wenn der Haken (14) in die entsprechende Ausnehmung (16) eingesetzt ist, wodurch verhindert wird, daß der Bolzen (18) durch die Feder (25) in seine Verrastungsstellung gedrückt wird, dadurch gekennzeichnet, daß die Verriegelung (17) als Schieber ausgebildet ist, der am Haken (14) anliegt und zwischen einer oberen und einer unteren Stellung gleitet, wenn der Bolzen (18) aus seiner Verrastungsstellung gelöst ist, daß die Verriegelungs (17) in ihrer oberen Stellung den Bolzen (18) mittels der Feder (25) in seine Verrastungsstellung drückt, daß die erste Anlagefläche (19) gegen den Haken gerichtet ist und an einem Vorsprung (21) unterhalb des Bolzens (18) angeordnet ist, wobei eine zweite Anlagefläche (22) angrenzend an und in einem Winkel zur ersten Anlagefläche (19) vorgesehen ist, daß die Verriegelung (17) in ihrer unteren Stellung mit ihrer ersten Anlagefläche (19) gegen den Steher (10) unterhalb der entsprechenden Ausnehmung (16) drückt, wenn der Haken (14) noch in der Ausnehmung (16) ist, und daß die zweite Anlagefläche (22) auf die untere Kante der entsprechenden Ausnehmung (16) drückt, wenn der Haken (14) in diese Ausnehmung (16) eingesetzt wird, um die Verriegelung (17) von ihrer unteren in ihre obere Stellung zu bewegen, wenn der Träger (11) in seine Verrastungsstellung gesenkt wird.

2. Vorrichtung nach Anspruch 1, dadurch gekennzeichnet, daß der Bolzen (18) auf einem Teil des Trägers in einer vorgespannten Stellung ruht, wenn der Träger vom Steher gelöst wird.

3. Vorrichtung nach einem der vorhergehenden Ansprüche, dadurch gekennzeichnet, daß der äußere Teil des Bolzens (18) nasenförmig ausgebildet ist.

4. Vorrichtung nach einem der vorhergehenden Ansprüche, dadurch gekennzeichnet, daß die Verriegelung (17) einen unteren Vorsprung (21) aufweist, welcher bei Entriegelung der ersten Anlagefläche (19) durch Bewegung des Trägers vom Steher derart nach außen schwenkt, daß er über die Fläche des Trägers, der an der Außenseite des Stehers ruht, herausragt.

5. Vorrichtung nach Anspruch 4, dadurch gekennzeichnet, daß die Feder (25) eine doppelte Blattfeder ist, bei welcher der Angriffspunkt der einen Feder (26) am unteren Vorsprung (21) angeordnet ist, wogegen der Angriffspunkt der anderen Feder (28) am oberen Abschnitt der Verriegelung (17) angeordnet ist.

6. Vorrichtung nach Anspruch 5, dadurch gekennzeichnet, daß der Träger (11) im Querschnitt U-förmige Vorsprünge (15) aufweist, in welchen die Feder (25) befestigt ist.

7. Vorrichtung nach einem der Ansprüche 4 bis 6, dadurch gekennzeichnet, daß die Verriegelung (17) einen oberen Vorsprung (24) hat, welcher zusammen mit dem unteren Vorsprung (21) beim Lösen der Verriegelung durch Zusammenwirken mit den U-förmigen Vorsprüngen die Bewegungsbahn der Verriegelung begrenzt.

**Revendications**

1. Dispositif pour le verrouillage d'une poutre sur un montant, par exemple dans un rayonnage pour stocker des palettes, le montant (10) présentant une série de troue (16) et la poutre (11) étant munie à chacune de ses deux extrémités d'au moins un crochet dirigé vers le bas (14) destiné à être introduit dans l'un, associée, desdits trous (16), une partie de ce crochet se logeant derrière le bord inférieur du trou associé (16) lorsque la poutre (11) est dans une position de repos sur le montant (10), la poutre (11) étant en outre munie de moyens de verrouillage permettant de verrouiller le crochet (14) dans le trou associé (16) lorsque la poutre est dans sa position de repos, ledit dispositif pour le verrouillage de la poutre (11) sur le montant (10) comprenant un ressort (25) et un organe rigide de verrouillage (17), cet organe de verrouillage (17) comprenant un doigt (18), un élément de préhension (23) et une première surface de contrôle de position (19), le ressort (25) et l'organe de verrouillage (17) étant agencés de façon que le ressort (25) repousse le doigt (18) dans une position de verrouillage entre le bord supérieur du trou associé (16) et la partie supérieure du crochet (14), verrouillant ainsi ce crochet (14) dans ce trou associé (16) lorsque la poutre est dans sa position de repos, l'élément de préhension étant agencé de façon à être manoeuvré à la main de manière que le doigt (18) puisse être extrait de sa position de verrouillage pour retirer la poutre, la première surface de contrôle de position (19) étant agencée de façon qu'elle peut être déplacée de manière à venir en butée sur le montant (10) lorsque le crochet (14) est introduit dans le trou associé (16), ce qui empêche ainsi le doigt (18) d'être repoussé par le ressort (25) dans sa position de verrouillage, caractérisé en ce que l'organe de verrouillage (17) est agencé comme un coulisseau disposé au voisinage du crochet (14) et coulissant entre une position supérieure et une position inférieure lorsqu'on extrait le doigt (18) à partir de sa position de repos, en ce que, dans sa position supérieure, cet organe de verrouillage (17) est apte à repousser le doigt (18) dans sa position de repos sous l'effet du ressort (25), en ce que la première surface de contrôle de position (19) fait face vers le crochet et est disposée sur une saillie (21) qui est située au-dessous du doigt (18) et qui présente une seconde surface de contrôle de position (22) disposée au voisinage de la première surface de contrôle de position (19) suivant une disposition angulaire par rapport à celle-ci, en ce que, dans la position inférieure de l'organe de verrouillage (17), la première surface de contrôle de position (19) de cet organe est apte à venir en butée sur le montant (10) au-dessous du trou associé (16) lorsque le crochet (14) se trouve encore à l'intérieur de ce trou (16), et en ce que la seconde surface de contrôle de position (22) est apte à venir en butée sur le bord inférieur du trou associé (16) lorsque le crochet (14) est introduit dans ce trou (16), de façon à déplacer l'organe de verrouillage (17) de sa position inférieure jusqu'à sa position supérieure lorsqu'on abaisse la poutre (11) dans sa position de repos.

2. Dispositif selon la revendication 1, caractérisé en ce que le doigt (18) repose dans une position précontrainte sur une partie de la poutre lorsque cette poutre a été libérée du montant.

3. Dispositif selon une revendication précédente quelconque, caractérisé en ce que la partie extérieure du doigt (18) est en forme de nez.

4. Dispositif selon une revendication précédente quelconque, caractérisé en ce que son organe de verrouillage (17) présente une saillie inférieure (21) qui, lorsque, lors du retrait de la poutre, la première surface de butée (19) quitte le contact du montant, pivote vers l'extérieur de manière à faire saillie par rapport à la surface de la poutre qui respose sur l'extérieur du montant.

5. Dispositif selon la revendication 4, caractérisé en ce que le ressort (25) est un double ressort à lame dans lequel le point d'action d'un ressort (26) est située à l'endroit de la saillie inférieure (21), tandis que le point d'action de l'autre ressort (28) est situé au voisinage de la partie supérieure de l'organe de verrouillage (17).

6. Dispositif selon la revendication 5, caractérisé en ce que la poutre (11) présente des déformations en saillie (15) qui sont en forme de U en section transversale et dans lesquelles est fixé le ressort (25).

7. Dispositif selon une quelconque des revendications 4—6, caractérisé en ce que l'organe de verrouillage (17) présente une saillie supérieure (24) qui, lors de l'extraction de cet organe de verrouillage et en coopération avec les déformations en forme de U (15), limite, en commun avec la saillie inférieure (21), le trajet de déplacement de cet organe de verrouillage.

Fig. 1

Fig. 2

Fig. 3

Fig. 4

Fig. 5